# FASCICULE DE BREVET EUROPEEN

(11) **EP 2 817 223 B1**
(45) Date de publication et mention de la délivrance du brevet: **03.04.2019**
(21) Numéro de dépôt: 13705478.9
(22) Date de dépôt: 22.02.2013
(51) Int. Cl.: B64D 15/12

(54) **PROCEDE DE FABRICATION D'UNE PEAU DE BORD D'ATTAQUE PAR CUISSON D'UN EMPILEMENT INTEGRANT DES ELEMENTS CHAUFFANTS ET DES COUCHES DE FIBRES PREIMPREGNEES**
VERFAHREN ZUR HERSTELLUNG EINER VORDERKANTENHÜLLE DURCH BACKEN EINES STAPELS VON ERWÄRMUNGSELEMENTEN UND SCHICHTEN VON VORIMPRÄGNIERTEN FASERN
METHOD FOR PRODUCING A LEADING EDGE SKIN BY BAKING A STACK INCORPORATING HEATING ELEMENTS AND LAYERS OF PRE-IMPREGNATED FIBRES

(30) Priorité: 24.02.2012 BE 201200107
(43) Date de publication de la demande: 31.12.2014
(73) Titulaire: Sonaca S.A., 6041 Gosselies (BE)
(72) Inventeur: CREPIN, Jean-Philippe, B-7800 Ath (BE); GUEUNING, Dimitri, B-1330 Rixensart (BE)
(74) Mandataire: Brevalex
(86) Numéro de dépôt international: PCT/EP2013/053519
(87) Numéro de publication internationale: WO 2013/124397

(56) Documents cités:
- EP-A2- 1 757 519
- EP-A2- 1 826 119
- BE-A- 524 357
- FR-A- 1 224 058
- FR-A1- 2 744 872

## Description

### DOMAINE TECHNIQUE

L'invention se rapporte au domaine du dégivrage et de l'antigivrage d'un bord d'attaque d'un élément de voilure d'aéronef.

Elle concerne en particulier la fabrication d'une peau de bord d'attaque intégrant des éléments de chauffage résistif pour le dégivrage et/ou l'antigivrage du bord d'attaque. De façon connue, le dégivrage et l'antigivrage sont deux actions distinctes mises en oeuvre avec des éléments résistifs agencés à des endroits différents sur le bord d'attaque, et alimentés par des puissances électriques distinctes.

L'invention s'applique de préférence à un volet mobile de bord d'attaque d'aile d'aéronef.

### ÉTAT DE LA TECHNIQUE ANTÉRIEURE

Le givrage d'un bord d'attaque d'aile d'aéronef se produit quand celui-ci passe à travers un nuage de gouttelettes d'eau qui sont, en dépit d'une température ambiante inférieure à 0°C, à l'état liquide. Cet état est généralement dénommé « surfusion ». L'eau liquide gèle alors presque instantanément sur les bords d'attaque de l'avion. Cela conduit à l'accumulation de glace et à une modification de la forme extérieure des éléments de voilure.

Par conséquent, le givrage présente de forts impacts pour la sécurité et les performances aérodynamiques des avions. Il dégrade la qualité de l'écoulement de l'air, augmentant la traînée tout en diminuant la portance de l'aile. En modifiant le profil extérieur de l'aile, il peut réduire la stabilité, la maniabilité et la sécurité de l'avion. Il peut également amener un tangage et un roulis incontrôlables de l'avion. Il conduit aussi à une augmentation de la consommation de carburant des avions, et à une dégradation de ses performances générales.

Des systèmes de protection contre le givrage des bords d'attaque ont été largement développés dans le passé. A cet égard, il existe plusieurs sortes de systèmes de protection contre le givrage, utilisant différentes sources d'énergie, et deux philosophies principales pour éviter l'accumulation de glace, à savoir l'antigivrage et le dégivrage. La grande majorité des avions à réaction commerciaux de grande taille sont pourvus d'un système de protection contre le givrage basé sur la projection d'air chaud sur les surfaces exposées au givrage, du fait que l'air chaud est facile à produire et à prélever. Bien que largement utilisée, cette solution nécessite un prélèvement d'air chaud au niveau du compresseur du moteur. Cela conduit inévitablement à la dégradation du cycle thermodynamique, et donc à la réduction des performances du moteur.

L'énergie électrique s'est alors présentée comme une alternative envisageable, car elle est facile à produire et à transporter vers les systèmes consommateurs d'électricité. Son avantage principal est qu'elle engendre moins de conséquences néfastes sur les performances des moteurs.

Dans ce contexte, la solution électrothermique a rapidement été retenue, car elle permet un antigivrage et/ou un dégivrage de bord d'attaque d'aile. Il est noté que de la même manière que pour le principe à « air chaud », un système électrothermique chauffe la zone protégée pour faire fondre ou pour évaporer l'eau présente.

Néanmoins, jusqu'à présent, les solutions connues de fabrication de tels bords d'attaque, comme celle décrite dans le document EP 1 757 519 A2 qui est considéré comme le document de l'art antérieur le plus proche, ne se sont pas révélées entièrement satisfaisantes, en particulier en raison des difficultés d'intégration des éléments de chauffage résistif conçus afin de fournir la chaleur nécessaire pour la protection contre la glace en surface.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de fabrication d'une peau de bord d'attaque d'élément de voilure d'aéronef, tel que revendiqué dans la revendication 1, ce procédé comprenant un ensemble d'éléments de chauffage résistif destiné à faire partie intégrante d'un système de dégivrage et/ou d'antigivrage du bord d'attaque, ledit procédé étant caractérisé en ce qu'il comporte une étape de cuisson d'un empilement dans un moule entre deux surfaces de moulage en regard, ledit empilement comprenant les éléments suivants :
- ledit ensemble d'éléments de chauffage résistif ;
- deux films adhésifs agencés respectivement de part et d'autre dudit ensemble, de sorte que les éléments de chauffage adhèrent à chacun de ces deux films adhésifs ;
- deux couches de fibres préimprégnées électriquement isolantes, adhérant respectivement auxdits deux films adhésifs sur les faces opposées à celles recevant lesdits éléments de chauffage ; et
- une pluralité de couches de fibres de carbone préimprégnées.

Globalement, l'invention apporte une solution simple, efficace et performante pour la fabrication d'une peau de bord d'attaque intégrant des éléments de chauffage résistif.

En particulier, l'invention est remarquable en ce qu'elle garantit l'obtention d'une peau de bord d'attaque avec un positionnement très précis des éléments de chauffage résistif, grâce à l'emploi, dans l'empilement, de films adhésifs et de couches de fibres préimprégnées dont la pégosité permet un maintien mutuel de ces mêmes couches durant la préparation de l'empilement et lors de leur placement au sein du moule. L'empilement peut ainsi être manipulé avant sa cuisson avec un moindre risque de déplacement des couches les unes par rapport aux autres, contrairement à l'emploi de fibres sèches. De même, cette spécificité ouvre avantageusement des possibilités d'automatisation du drapage des différentes couches de l'empilement.

L'utilisation de fibres préimprégnées est également avantageuse en ce que ces matériaux sont déjà qualifiés pour le domaine de l'aéronautique. Aucune qualification additionnelle n'est requise, ce qui n'implique aucun surcoût pour la mise en oeuvre du procédé. De plus, ces fibres préimprégnées confèrent habituellement un meilleur comportement mécanique que les fibres sèches, généralement utilisée pour la fabrication de pièces en matériau composite par RTM (de l'anglais « Resin Transfer Molding »).

A cet égard, l'invention est préférentiellement prévue pour être basée sur une technique de fabrication dite SQRTM (de l'anglais « Same Qualified Resin Transfer Molding »), qui a pour principale différence avec la technique RTM d'utiliser des couches de fibres préimprégnées, c'est-à-dire des couches non sèches.

De plus, la technique de SQRTM offre la possibilité d'utiliser des couches du type tissu 2D, 2.5D, voire 3D, mais également des couches dites unidirectionnelles, dans lesquelles les fibres parallèles sont maintenues les unes aux autres par la résine.

En sus des avantages déjà mentionnés ci-dessus, liés à l'utilisation des fibres préimprégnées, il est noté que la technique SQRTM ne nécessite aucun flux de résine majeur à travers l'empilement durant la cuisson, contrairement à la technique RTM dans laquelle la résine est entièrement amenée depuis l'extérieur du moule. Les éléments de chauffage résistif placés au sein de l'empilement ne provoquent aucune dégradation de la pièce obtenue, alors qu'au contraire, par mise en oeuvre d'une technique RTM, ils auraient tendance à former des barrières naturelles au fluage de la résine, avec pour conséquences l'apparition de zones sèches ou de porosités inacceptables.

Par ailleurs, la technique SQRTM est mise en oeuvre par une presse à plateaux chauffants, hors autoclave. Le passage d'un procédé de cuisson en autoclave à un procédé sous presse permet de réduire les temps de cycle et les lourds investissements liés aux autoclaves, et ainsi de réduire les coûts de fabrication des peaux de bord d'attaque.

La cuisson sous presse permet un meilleur contrôle géométrique des surfaces interne et externe de la peau, ce qui est très appréciable en particulier pour l'obtention d'une qualité satisfaisante du profil aérodynamique formé par la surface extérieure. La qualité de surface de la surface intérieure de la peau permet quant à elle de faciliter l'installation de nervures solidarisant la peau à la structure de l'élément de voilure, et améliore ainsi la démontabilité en service de cette même peau.

L'épaisseur de la peau devient parfaitement maîtrisée grâce à l'utilisation des deux surfaces de moulage en regard. Cela favorise également l'interchangeabilité des peaux, très utile en cas d'endommagement.

Par ailleurs, le fait de travailler avec un moule fermé permet de brider la dilatation thermique des tôles métalliques, dans le cas préféré où l'empilement intègre de telles tôles. Leur dilatation thermique est par conséquent empêchée au-delà de la dilatation thermique du moule. Ce bridage de la dilatation thermique des tôles métalliques permet de limiter les contraintes au niveau de l'interface entre les couches de fibres préimprégnées à faible coefficient d'expansion thermique, et les tôles métalliques à plus fort coefficient. Le niveau des contraintes internes permanentes générées aux interfaces matériaux composites / tôles métalliques est ainsi diminué.

De plus, la cuisson sous presse permet de limiter encore davantage le risque de mouvement des éléments constitutifs de l'empilement, favorisant l'obtention d'une géométrie et d'une composition parfaitement maîtrisées de la peau de bord d'attaque.

De préférence, ledit ensemble d'éléments de chauffage résistif comporte une pluralité de bornes de connexion électrique traversant un ou plusieurs orifices pratiqués à travers les éléments de l'empilement situés d'un côté desdits éléments de chauffage résistif, lesdites bornes de connexion faisant saillie dudit empilement de manière à être insérées dans des encoches pratiquées sur l'une des deux surfaces de moulage. Dans ce cas de figure, chaque encoche est préférentiellement remplie d'un bloc de silicone traversé par une ou plusieurs desdites bornes de connexion électrique, de sorte que celles-ci ne soient pas enrobées de résine durant la cuisson.

De préférence, ledit empilement comprend également une tôle métallique à chaque extrémité de l'empilement, en partie pour répondre au requis de protection contre l'érosion et contre la foudre, pour protéger la structure et les éléments résistifs.

De préférence, lesdites couches de fibres de carbone préimprégnées constituent un noyau dudit empilement, les éléments de ce dernier étant agencés symétriquement par rapport audit noyau, à l'exception de l'ensemble d'éléments de chauffage résistif présent que d'un seul côté dudit noyau. Cette symétrie des couches permet d'obtenir un stratifié de meilleure qualité, en particulier en évitant les problèmes de déformation à la cuisson.

Néanmoins, lesdites couches de fibres de carbone préimprégnées pourraient être disposées différemment, toujours de manière à assurer la fonction structurale à la peau.

De préférence, lesdits éléments de chauffage sont déposés à plat sur le film d'adhésif correspondant, avant d'être placés dans le moule. Préférentiellement, durant ce dépôt, le film est déjà posé sur sa couche de fibres de verre préimprégnées correspondante, afin que la manipulation de l'ensemble obtenu soit plus aisée, et moins sensible au risque de déchirure.

Selon l'invention, ladite étape de cuisson est réalisée par la mise en oeuvre des opérations successives suivantes :
- mise en circulation d'une résine d'injection dans ledit moule, de manière à générer une contrepression à la périphérie de l'empilement, pour la mise en pression de la résine contenue dans ce dernier ; puis
- arrêt de la mise en circulation de la résine d'injection après le gel de la résine de l'empilement, conduisant ladite résine d'injection à s'introduire entre l'empilement et chacune des deux surfaces du moule pour appliquer une pression surfacique sur ledit empilement, jusqu'au gel de ladite résine d'injection.

Ainsi, la résine d'injection pourrait ici être qualifiée comme faisant partie intégrante de l'outillage de moulage, puisqu'elle est utilisée afin de générer une contrepression sur la résine de l'empilement durant sa cuisson. Cela améliore considérablement la qualité du stratifié obtenu.

De préférence, ladite étape de cuisson est réalisée par la mise en oeuvre des opérations successives suivantes :
- chauffage du moule, par le biais d'une presse à plateaux chauffants destinés à appliquer une pression sur l'empilement, via le moule, les plateaux chauffants étant portés à une température T1, et chauffage d'une résine d'injection destinée à être mise en circulation dans le moule, la résine étant chauffée à une température T0 ;
- après la stabilisation de la température des plateaux chauffants à la température T1 et vieillissement de la résine de l'empilement, mise en circulation à un instant t1 de la résine d'injection dans le moule de manière à générer une contrepression à la périphérie de l'empilement, pour la mise en pression de la résine contenue dans ce dernier, ladite mise en circulation de la résine d'injection s'opérant à une pression P'1, avec une montée en température de la température T0 à la température T1 ;
- à un instant t'1, la pression de la résine d'injection et la pression sur l'empilement appliquée par la presse via le moule, sont toutes les deux portées à une valeur P1 ;
- à un instant t"1, montée en température de la résine d'injection et de la presse, jusqu'à une température T2 atteinte à un instant t2 correspondant au gel de la résine de l'empilement ;
- après le gel de la résine de l'empilement, arrêt de la mise en circulation de la résine d'injection, qui reste présente dans le moule en s'introduisant entre l'empilement et chacune des deux surfaces du moule pour appliquer une pression surfacique sur ledit empilement, jusqu'au gel de ladite résine d'injection à un instant t3 ;
- après le gel de la résine d'injection, la température de la presse est maintenue à la température T2 jusqu'à un instant t4, alors que la pression sur l'empilement appliquée par la presse via le moule chute à une valeur P0.

A cet égard, il est noté que l'opération de montée en température de la résine d'injection et de la presse, initiée à l'instant t"1, est de préférence réalisée à une vitesse comprise entre 1,5 et 2,5 °C/minute.

Enfin, l'invention a également pour objet un procédé de fabrication d'un bord d'attaque d'un élément de voilure d'aéronef, à l'aide d'une peau de bord d'attaque obtenue par la mise en oeuvre du procédé tel que décrit ci-dessus, le procédé comprenant une étape consistant à monter un ou plusieurs borniers sur une surface intérieure de ladite peau, et à y raccorder lesdites bornes de connexion des éléments de chauffage résistif. De par la précision du positionnement des éléments de chauffage résistif et de leurs bornes de connexion, conservée jusqu'à l'obtention de la peau stratifiée et résultant de la pégosité des couches préimprégnées et de l'utilisation de films adhésifs, la mise en place des borniers se révèle facilitée.

Cette solution de connexion mécanique, de préférence par vissage des bornes sur les borniers, est préférée à une solution de connexions soudées ou brasées, par souci de conservation de l'accès aux bornes de connexion des résistances électriques. Cette solution permet également une meilleure conservation dans le temps.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 montre une vue en perspective d'un volet mobile de bord d'attaque pour aile d'aéronef, intégrant une peau de bord d'attaque obtenue à l'aide d'un procédé de fabrication conforme à la présente invention ;
- la figure 2 représente l'empilement destiné à subir une étape de cuisson afin de former la peau montrée sur la figure précédente ;
- les figures 3 à 9 représentent différentes étapes successives d'un mode de réalisation préféré du procédé de fabrication selon l'invention ;
- la figure 10 représente un graphe montrant de façon détaillée les différentes conditions de température et de pression appliquées durant l'étape de cuisson dudit empilement ; et
- la figure 11 montre une vue schématisant le raccordement d'un bornier sur les bornes de connexion des éléments chauffants.

### EXPOSÉ DÉTAILLÉ DE MODES DE RÉALISATION PRÉFÉRÉS

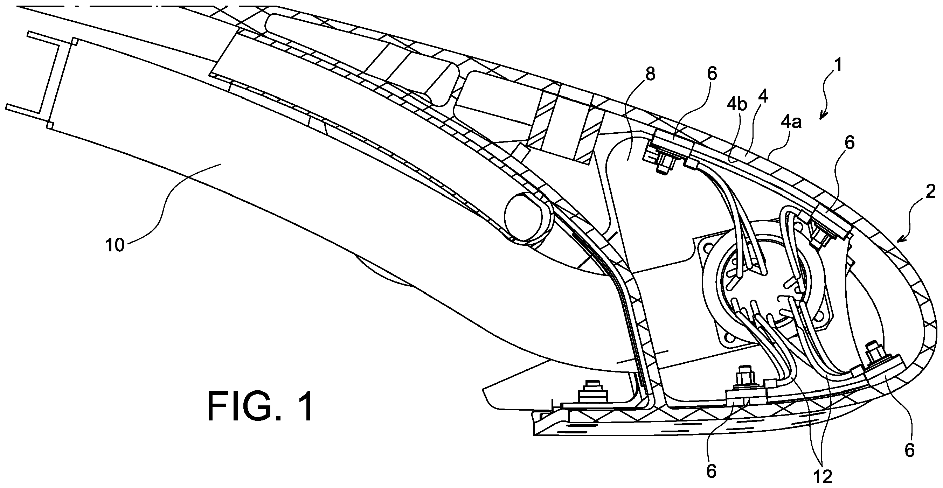

En référence tout d'abord à la figure 1, il est représenté un volet mobile de bord d'attaque 1 pour aile d'aéronef, ce volet étant en particulier équipé d'un bord d'attaque 2 destiné à être obtenu par mise en oeuvre d'un procédé selon un mode de réalisation préféré de l'invention.

Le bord d'attaque 2 comprend une peau 4 de faible épaisseur, par exemple comprise entre 3 et 20mm. Sa surface extérieure 4a définit le profil aérodynamique du bord d'attaque, tandis que sa surface intérieure 4b est raccordée à différents éléments, notamment des borniers 6 destinés au raccordement électrique des éléments de chauffage résistif intégrés dans la peau 4. Les borniers 6 et la peau 4 forment ensemble le bord d'attaque du volet, ce dernier comportant par ailleurs des éléments classiques du type nervures de renfort 8 plaquées contre la surface intérieure 4b et orientées sensiblement orthogonalement à la direction d'envergure, de même que des bras 10 permettant de raccorder électriquement le volet à la structure principale de l'aile, et/ou de guider la sortie et la rentrée du volet.

En outre, l'aile intègre un système mixte de dégivrage et/ou d'antigivrage du bord d'attaque, destiné à protéger l'avion contre l'accumulation de glace sur la surface extérieure 4a de la peau 4.

Le système de dégivrage et/ou d'antigivrage, peu visible sur la figure 1, comporte classiquement une source d'énergie électrique, un système de câblage 12 pour distribution de l'énergie nécessaire à la surface 4a à chauffer, des éléments de chauffage résistif dans les zones à protéger contre l'accumulation de glace, des capteurs de température au niveau de la surface chauffée 4a, une unité de contrôle pour détecter les conditions de givrage et moduler la chaleur fournie à la surface, puis un poste de contrôle monté sur un panneau d'affichage pour garder l'équipage informé du fonctionnement du système et pour activer le système.

Le procédé selon l'invention concerne la fabrication de la peau 4, qui est réalisée d'une seule pièce à l'aide de la technique SQRTM débutant par la réalisation d'un empilement de couches/plis, en dehors du moule ou directement dans le moule, et suivie par une étape de cuisson de cet empilement.

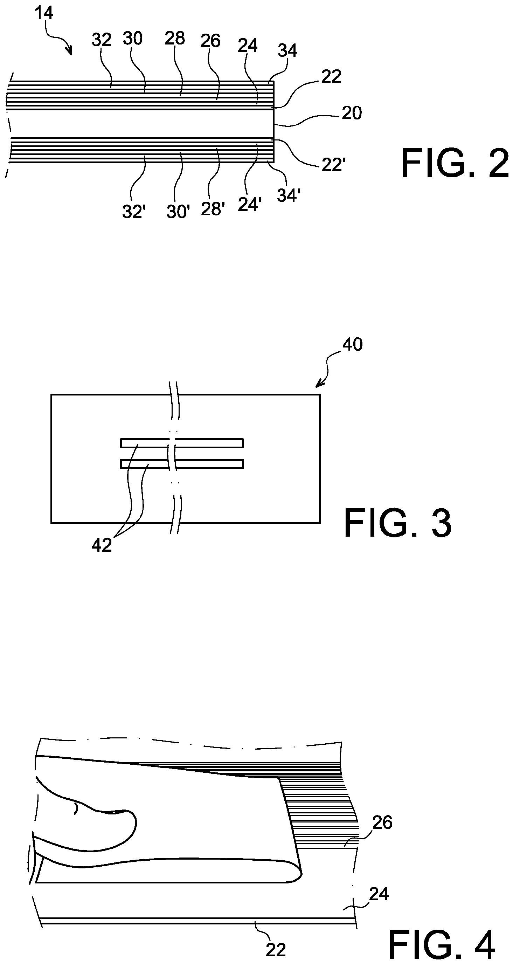

La figure 2 est une vue schématisant cet empilement 14, après sa finalisation.

Il comporte un noyau central, également dit coeur de l'empilement, destiné à procurer la fonction structurale à la peau 4. Ces couches, une fois stratifiées, sont en effet destinées à répondre au requis de tenue structurale et de réduction des effets néfastes des impacts locaux de faible énergie, sur les éléments du système environnant.

Il s'agit d'un empilement d'une pluralité de couches de fibres de carbone préimprégnées 20, par exemple avec de la résine du type Epoxy, ou encore du type BMI (bismaléimide). Le nombre de couches peut être compris entre 5 et 40, chacune réalisée avec des fibres tissées ou bien à l'aide de fibres unidirectionnelles. Elles sont de préférence empilées directement les unes sur les autres, sans autres éléments intercalés entre celles-ci. La pégosité de ces couches 20 permet un maintien mutuel très satisfaisant.

Au-dessus des couches de fibres de carbone 20 est placé une couche de fibres de verre préimprégnées 22, par exemple avec de la résine du type Epoxy, ou encore du type BMI. Un film adhésif 24 recouvre et adhère à l'aide de l'une de ses deux faces à la couche 22, de même que sur sa face opposée, supérieure dans l'empilement, un ensemble d'éléments de chauffage résistif 26 adhère également à ce film. Le film 24 peut être du type classique, en polymère par exemple, toujours à base de résine Epoxy ou BMI. Au sein de l'empilement, les éléments sont choisis de manière à ce que les résines qu'ils intègrent soient de même nature, pour des raisons de compatibilité chimique. Il présente à température ambiante une consistance qui lui permet de faire adhérer les deux éléments respectivement au contact de ses deux faces, même si cette adhérence n'est pas comparable à une résistance structurale par collage telle qu'on l'entend classiquement dans le domaine aéronautique. Cette résistance structurale n'est obtenue qu'après la cuisson de l'empilement, et le durcissement de la résine qui forme ce film 24 et qui adhère aux couches adjacentes.

Les éléments de chauffage résistifs 26 sont des résistances électriques permettant un chauffage électrothermique du stratifié. Leur géométrie est complexe et précise, de manière à pouvoir appliquer la quantité de chauffage requise en tout point de la surface extérieure de la peau.

L'ensemble 26, d'épaisseur très faible ne dépassant pas 120 µm, est également recouvert d'un même film adhésif 28, lui-même recouvert d'une autre couche 30 de fibres de verre préimprégnées. Les deux couches de fibres de verre 22, 30 enserrent donc les éléments résistifs 26 de manière à les isoler électriquement d'une part des couches de fibres de carbone 20, et d'autre part d'une tôle métallique 34 formant la dernière couche de l'empilement 14, et collée à la couche de fibres de verre 30 via un autre film adhésif 32 identique ou similaire aux précédents.

La tôle métallique 34, réalisée à faible épaisseur en titane ou en aluminium, est prévue essentiellement pour répondre au requis de protection contre l'érosion et contre la foudre.

Dans l'empilement 14, sous les couches de fibres de carbone 20, il est prévu globalement les mêmes couches que celles agencées au-dessus du noyau 20. Cette symétrie, prévue pour limiter les problèmes de déformation à la cuisson, implique donc la présence successive, de bas en haut, d'une tôle métallique 34', d'un film adhésif 32', d'une couche de fibres de verre préimprégnées 30', de films adhésifs 28', 24', et d'une autre couche de fibres de verre 22'. Le seul élément manquant de la partie inférieure de l'empilement 14 qui empêche la symétrie parfaite par rapport au noyau 20 est donc l'ensemble d'éléments de chauffage résistif, car sa présence n'aurait pas d'intérêt dans cette zone du stratifié.

Il est indiqué que la surface supérieure de la tôle 34 est destinée à former la surface extérieure 4a de la peau de bord d'attaque, tandis que la surface inférieure de la tôle 34' est destinée à former la surface intérieure 4b de cette même peau. La tôle 34' confère également une amélioration de la résistance mécanique globale de la peau face aux impacts susceptibles de se produire sur la surface extérieure de la tôle 34.

En référence à présent aux figures 3 à 8, il est représenté une manière préférée de réaliser l'empilement 14.

Tout d'abord, comme visible sur la figure 3, il est procédé à l'empilement de l'ensemble des éléments destinés à se situer sous la couche de fibres de verre 22, ces éléments allant donc de la tôle 34' aux plis de carbone 20. Ils forment un ensemble référencé 40 sur la figure 3, traversé par un ou plusieurs orifices 42 s'étendant selon la direction d'empilement, et ici en forme de fentes. D'autres formes qu'une fente peuvent néanmoins être envisagées, comme une forme circulaire, sans sortir du cadre de l'invention. Cet ensemble 40 peut être drapé de façon manuelle ou automatique, dans le moule ou à l'extérieur de ce dernier, de préférence à plat.

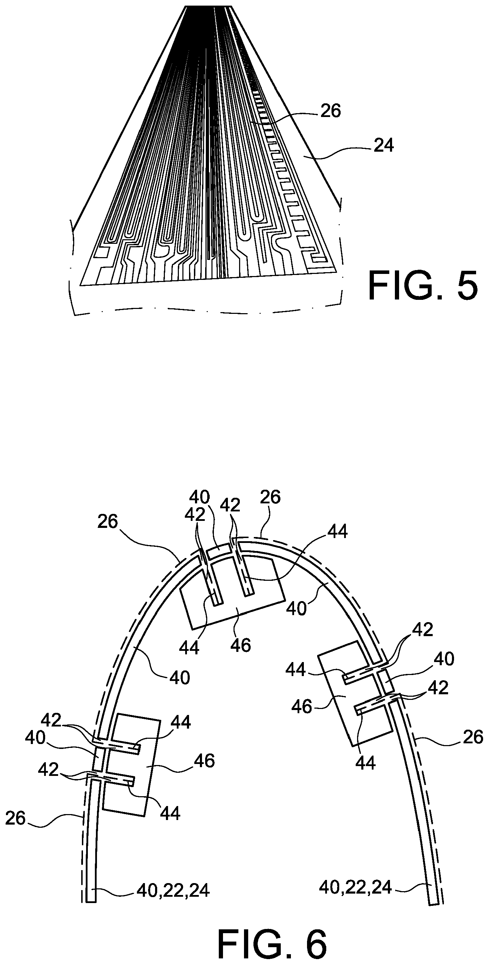

Ensuite, le film adhésif 24 est collé sur la couche de fibres de verre préimprégnées 22, de préférence à plat en dehors du moule. Ces deux éléments 22, 24 sont également troués de manière à prolonger les fentes 42 lorsqu'ils sont placés par la suite sur l'ensemble 40, de sorte que ces fentes s'étendent jusqu'au niveau des éléments chauffants 26 destinés à être collés sur le film 24. Ce collage s'effectue par pelage, comme cela été schématisé sur la figure 4, et de préférence à l'aide de repères réalisés par faisceaux lasers de manière à assurer un positionnement précis des résistances 26. L'adhérence est telle que l'ensemble obtenu, à savoir la couche de fibres de verre 22, le film adhésif 24 et les éléments chauffants 26, peut être manipulé de la position initiale à plat montrée sur la figure 5 à la position implantée sur l'ensemble 40 montrée sur la figure 6, sans risquer de faire évoluer la position des résistances 26 par rapport à la couche 22.

Sur la figure 6, il est possible d'apercevoir que les éléments chauffants 26 comportent des bornes de connexion électrique 44 qui sont insérées à travers les orifices/fentes 42 de manière à faire saillie vers le bas de l'empilement. L'extrémité de ces bornes 44 est alors protégée par un bloc de silicone 46 faisant saillie de l'empilement, donc de la tôle métallique intérieure, de manière à ce qu'elles ne soient pas enrobées de résine lors de la cuisson.

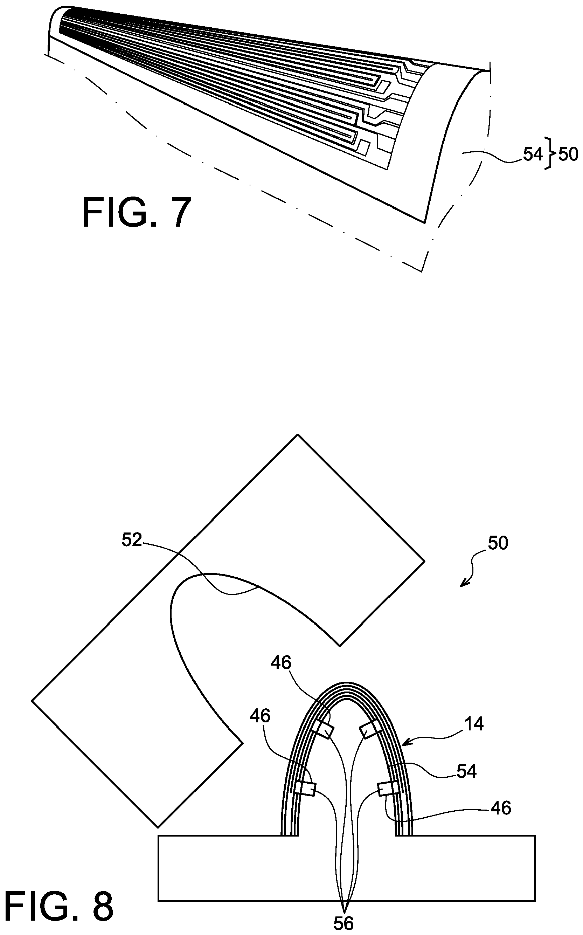

L'empilement obtenu est ensuite placé dans un moule 50 montré sur les figures 7 et 8, ce moule présentant deux surfaces de moulage 52, 54 en regard, constituant respectivement une forme et une contre-forme.

Lors de la mise en place de l'empilement sur la surface intérieure 54 du moule, les blocs de silicone 46 entourant les bornes 44 sont insérés dans des encoches correspondantes 56 de cette surface 54, comme cela est visible sur la figure 8.

Ensuite, le film adhésif 28, la couche 30 de fibres de verre préimprégnées, le dernier film adhésif 32 et la tôle métallique extérieure 34 sont placés dans l'empilement 14 au-dessus des éléments résistifs 26, de manière à finaliser cet empilement.

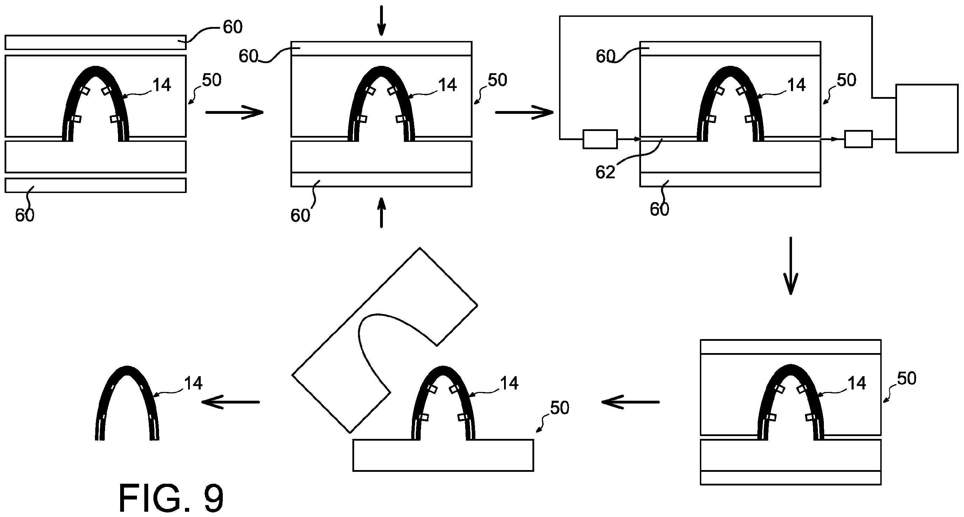

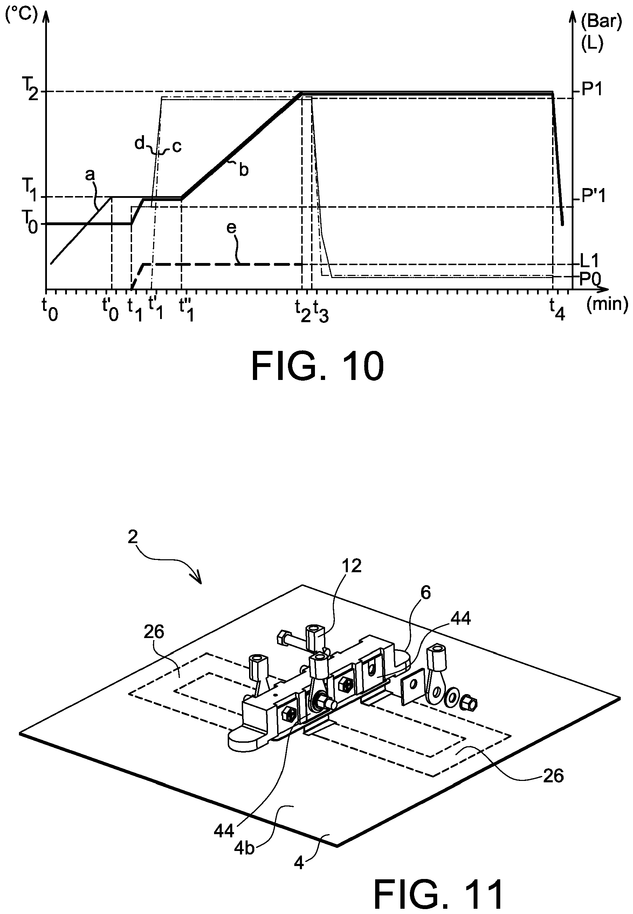

La figure 9 montre les différentes étapes de la technique SQRTM, à partir du placement de l'empilement dans le moule 50. La figure 10 représente quant à elle un graphe détaillant la manière dont l'étape de cuisson est opérée, en particulier en montrant les différentes conditions de température et de pression appliquées à cette étape. Sur le graphe :
- la courbe (a) correspond à la température (en °C) des plateaux chauffants de la presse en fonction du temps (en minutes). Elle correspond également sensiblement à la température de l'ensemble des éléments de l'outillage, ainsi qu'à celle de l'empilement ;
- la courbe (b) correspond à la température (en °C) de la résine d'injection en fonction du temps (en minutes) ;
- la courbe (c) correspond à la pression (en bar) sur l'empilement appliquée par la presse via le moule, en fonction du temps (en minutes) ;
- la courbe (d) correspond à la pression (en bar) de la résine d'injection dans le moule, en fonction du temps (en minutes) ; et
- la courbe (e) correspond à la quantité (en litres) de résine d'injection en circulation à travers le moule, en fonction du temps (en minutes).

Le moule 50 est tout d'abord inséré dans une presse à plateaux chauffants 60, comme cela est visible sur le premier schéma de la figure 9. Le schéma suivant montre la fermeture de la presse.

A un instant t0, le moule 50 est chauffé par le biais des plateaux chauffants 60, ces derniers étant portés à une température T1 de l'ordre par exemple de 80 à 120°C, à une vitesse de 1,5 à 2,5°C/min, comme le montre la courbe (a). Simultanément, une résine d'injection destinée à être mise en circulation ultérieurement dans le moule 50 est chauffée à une température T0, par exemple de l'ordre de 60 à 100°C, comme le montre la courbe (b). Cette résine est préférentiellement de même nature que celle des couches de fibres préimprégnées de l'empilement.

A l'instant t'0, la température des plateaux chauffants 60 atteint la valeur T1, qui est maintenue pendant une période de vieillissement de la résine des couches de fibres préimprégnées de l'empilement, qui dure maximum 20 min jusqu'à un instant t1. Ce vieillissement peut également concerner la résine des films adhésifs de l'empilement. Certaines résines n'ont néanmoins pas besoin de subir un vieillissement, de sorte que l'instant t1 correspond alors à l'instant t'0.

A cet instant t1, après la stabilisation de la température des plateaux chauffants à la température T1 et le vieillissement de la résine de l'empilement, la résine d'injection 62 est mise en circulation dans le moule 50, comme cela est représenté sur le troisième schéma de la figure 9, et comme montré sur la courbe (e). Cette mise en circulation s'effectue à l'aide de moyens conventionnels, du type pompe à vide et réservoir de résine. La mise en circulation de la résine d'injection 62 s'opère à une pression P'1, de l'ordre de 1 à 3 bars comme montré sur la courbe (d), et s'accompagne d'une montée en température de la température T0 à la température T1. La résine d'injection 62, présente en volume L1 dans le moule, génère une contrepression à la périphérie de l'empilement autour de laquelle elle circule avant d'être recirculée en continu, cette contrepression ayant pour fonction la mise en pression de la résine contenue dans l'empilement 14. Par conséquent, la résine d'injection 62 n'est pas prévue pour fluer à travers l'empilement 14, mais sert essentiellement à confiner la résine des préimprégnés afin d'éviter l'apparition de défauts/manques à la périphérie du stratifié obtenu.

A un instant t'1 séparé d'une durée inférieure à 20 minutes de l'instant t1, la pression de la résine d'injection 62 et la pression sur l'empilement 14 appliquée par la presse 60 via le moule 50, schématisée par la courbe (c), sont toutes les deux portées rapidement à une valeur P1, par exemple de l'ordre de 7 bars. La température de la résine 62 et la température des plateaux chauffants 60 sont quant à elles conservées à la valeur T1, jusqu'à un instant t"1 auquel une montée en température de la résine d'injection et des plateaux est amorcée, jusqu'à une température T2 de l'ordre de 175 à 185°C pour une résine Epoxy et de l'ordre de 185 à 195°C, et ce de préférence à une vitesse d'environ 1,5 à 2,5 °C/min.

La valeur T2 est atteinte à un instant t2 correspondant au gel de la résine de l'empilement, qui provoque un retreint de cette résine. Après le gel de la résine de l'empilement, la mise en circulation de la résine d'injection est stoppée, celle-ci restant présente dans le moule 50 et s'introduisant entre l'empilement 14 et chacune des deux surfaces 52, 54 du moule, pour appliquer une pression surfacique sur cet empilement. L'introduction de la résine 62 entre l'empilement 14 et les deux surfaces 52, 54 est rendue possible grâce au fait que lors du retreint de résine de l'empilement, la partie supérieure du moule commence à talonner la partie inférieure du moule, alors qu'un jeu important était initialement prévu entre ces deux parties. Néanmoins, l'introduction de la résine entre l'empilement 14 et les deux surfaces 52, 54 permet de maintenir le niveau de pression appliqué par la presse sur l'empilement, via le moule 50, mais également via la résine d'injection 62 qui joue alors le rôle de transmission de cette pression à l'empilement 14.

La pression appliquée par la résine d'injection 62 sur les surfaces inférieure et supérieure de l'empilement 14 est ainsi maintenue jusqu'au gel de la résine d'injection, à un instant t3 séparé d'une durée par exemple inférieure à 20 minutes de l'instant t2. Après ce gel, le retreint de la résine d'injection entraîne une chute de la pression appliquée par la presse sur l'empilement à une valeur très faible P0, tout comme une chute à cette même valeur de la pression de la résine d'injection gelée.

Après le gel de la résine d'injection, la température de la presse 60 est maintenue à la température T2 jusqu'à un instant t4 séparé d'une durée de 120 à 210 minutes de l'instant t2 pour une résine Epoxy, et d'une durée de 180 à 210 minutes pour une résine BMI, au cours de laquelle il se produit la polymérisation complète de la peau de bord d'attaque. Il est noté que durant cette polymérisation, montrée sur le quatrième schéma de la figure 9, les fentes 42 de l'empilement sont consolidées par de la résine des couches de fibres préimprégnées.

Ensuite, comme cela a été représenté sur les deux derniers schémas de la figure 9, le moule est extrait de la presse puis ouvert, et la peau stratifiée 4 est retirée du moule avant de subir un détourage.

Enfin, en référence à la figure 11, le bord d'attaque est finalisé en montant les borniers 6 sur la surface intérieure 4b de la peau 4, et en y raccordant les bornes de connexion 44 des éléments de chauffage 26. Les bornes 44 sont préférentiellement vissées sur les borniers 6, qui permettent le raccordement de ces éléments de chauffage 26 avec le système de câblage 12.

Le positionnement précis des éléments résistifs 26 favorise un montage/remontage aisé des borniers, particulièrement appréciable pour la manutention.

Néanmoins, il est noté que d'autres moyens de connexion sont envisageables pour le raccordement électrique des bornes 44, par exemple la soudure/brasure, et ce que les bornes 44 soient ou non en saillie de l'empilement.

Bien entendu, diverses modifications peuvent être apportées par l'homme du métier à l'invention qui vient d'être décrite, uniquement à titre d'exemples non limitatifs.

## Revendications

1. Procédé de fabrication d'une peau (4) de bord d'attaque (2) d'élément de voilure d'aéronef, comprenant un ensemble d'éléments de chauffage résistif (26) destiné à faire partie intégrante d'un système de dégivrage et/ou d'antigivrage du bord d'attaque, ledit procédé étant **caractérisé en ce qu'**il comporte une étape de cuisson d'un empilement (14) dans un moule (50) entre deux surfaces de moulage (50, 52) en regard, ledit empilement comprenant les éléments suivants :
- ledit ensemble d'éléments de chauffage résistif (26) ;
- deux films adhésifs (24, 28) agencés respectivement de part et d'autre dudit ensemble (26), de sorte que les éléments de chauffage adhèrent à chacun de ces deux films adhésifs ;
- deux couches de fibres préimprégnées électriquement isolantes (22, 30), adhérant respectivement auxdits deux films adhésifs (24, 28) sur les faces opposées à celles recevant lesdits éléments de chauffage (26) ; et
- une pluralité de couches de fibres de carbone préimprégnées (20),
et **en ce que** ladite étape de cuisson est réalisée par la mise en oeuvre des opérations successives suivantes :
- mise en circulation d'une résine d'injection (62) dans ledit moule (50), de manière à générer une contrepression à la périphérie de l'empilement (14), pour la mise en pression de la résine contenue dans ce dernier ; puis
- arrêt de la mise en circulation de la résine d'injection (62) après le gel de la résine de l'empilement (14), conduisant ladite résine d'injection (62) à s'introduire entre l'empilement (14) et chacune des deux surfaces du moule (52, 54) pour appliquer une pression surfacique sur ledit empilement, jusqu'au gel de ladite résine d'injection (62).

2. Procédé selon la revendication 1, **caractérisé en ce que** ladite étape de cuisson est réalisée par la mise en oeuvre des opérations successives suivantes :
- chauffage du moule (50), par le biais d'une presse à plateaux chauffants (60) destinés à appliquer une pression sur l'empilement (14), via le moule (50), les plateaux chauffants étant portés à une température T1, et chauffage d'une résine d'injection (62) destinée à être mise en circulation dans le moule, la résine d'injection (62) étant chauffée à une température T0 ;
- après la stabilisation de la température des plateaux chauffants (60) à la température T1 et vieillissement de la résine de l'empilement, mise en circulation à un instant t1 de la résine d'injection (62) dans le moule (50) de manière à générer une contrepression à la périphérie de l'empilement (14), pour la mise en pression de la résine contenue dans ce dernier, ladite mise en circulation de la résine d'injection s'opérant à une pression P'1, avec une montée en température de la température T0 à la température T1 ;
- à un instant t'1, la pression de la résine d'injection (62) et la pression sur l'empilement (14) appliquée par la presse (60) via le moule (50), sont toutes les deux portées à une valeur P1 ;
- à un instant t"1, montée en température de la résine d'injection (62) et de la presse (60), jusqu'à une température T2 atteinte à un instant t2 correspondant au gel de la résine de l'empilement ;
- après le gel de la résine de l'empilement, arrêt de la mise en circulation de la résine d'injection (62), qui reste présente dans le moule (50) en s'introduisant entre l'empilement (14) et chacune des deux surfaces du moule (52, 54) pour appliquer une pression surfacique sur ledit empilement, jusqu'au gel de ladite résine d'injection (62) à un instant t3 ; et
- après le gel de la résine d'injection (62), la température de la presse (60) est maintenue à la température T2 jusqu'à un instant t4, alors que la pression sur l'empilement (14) appliquée par la presse (60) via le moule (50) chute à une valeur P0.

3. Procédé selon la revendication 2, **caractérisé en ce que** l'opération de montée en température de la résine d'injection (62) et de la presse (50), initiée à l'instant t"1, est réalisée à une vitesse comprise entre 1,5 et 2,5 °C/minute.

4. Procédé selon l'une quelconque des revendications précédentes, **caractérisé en ce que** ledit ensemble d'éléments de chauffage résistif (26) comporte une pluralité de bornes de connexion électrique (44) traversant un ou plusieurs orifices (42) pratiqués à travers les éléments de l'empilement (14) situés d'un côté desdits éléments de chauffage résistif (26), lesdites bornes de connexion (44) faisant saillie dudit empilement de manière à être insérées dans des encoches (56) pratiquées sur l'une (54) des deux surfaces de moulage.

5. Procédé selon la revendication 4, **caractérisé en ce que** chaque encoche (56) est remplie d'un bloc de silicone (46) traversé par une ou plusieurs desdites bornes de connexion électrique (44).

6. Procédé selon l'une quelconque des revendications précédentes, **caractérisé en ce que** ledit empilement comprend également une tôle métallique (34, 34') à chaque extrémité de l'empilement.

7. Procédé selon l'une quelconque des revendications précédentes, **caractérisé en ce que** lesdites couches de fibres de carbone préimprégnées (20) constituent un noyau dudit empilement (14), les éléments de ce dernier étant agencés symétriquement par rapport audit noyau, à l'exception de l'ensemble d'éléments de chauffage résistif (26) présent que d'un seul côté dudit noyau.

8. Procédé selon l'une quelconque des revendications précédentes, **caractérisé en ce que** lesdits éléments de chauffage (26) sont déposés à plat sur le film d'adhésif correspondant (24), avant d'être placés dans le moule (50).

9. Procédé de fabrication d'un bord d'attaque (2) d'un élément de voilure d'aéronef, à l'aide d'une peau de bord d'attaque (4) obtenue par la mise en oeuvre du procédé selon l'une quelconque des revendications précédentes, le procédé comprenant une étape consistant à monter un ou plusieurs borniers (6) sur une surface intérieure (4b) de ladite peau (4), et y raccorder lesdites bornes de connexion (44) des éléments de chauffage résistif (26).

## Patentansprüche

1. Verfahren zur Herstellung einer Haut (4) einer Vorderkante (2) eines Tragflächenelementes eines Luftfahrzeugs, aufweisend einen Satz von Widerstandsheizelementen (26), die dazu bestimmt sind, integraler Bestandteil eines Systems zur Enteisung und/oder zum Vereisungsschutz der Vorderkante zu sein, wobei das Verfahren **dadurch gekennzeichnet ist, dass** es einen Schritt zum Backen einer Übereinanderschichtung (14) in einem Formwerkzeug (50) zwischen zwei gegenüberliegenden Formgebungsflächen (50, 52) beinhaltet, wobei die Übereinanderschichtung die folgenden Elemente aufweist:
den Satz von Widerstandsheizelementen (26);
zwei Haftfilme (24, 28), die beiderseits des Satzes (26) angeordnet sind, so dass die Heizelemente an jedem dieser Haftfilme anhaften;
zwei Schichten von elektrisch isolierenden vorimprägnierten Fasern (22, 30), die jeweils an den zwei Haftfilmen (24, 28) anhaften, und zwar auf den Seiten entgegengesetzt zu denen, welche die Heizelemente (26) entgegennehmen; und
eine Mehrzahl von Schichten von vorimprägnierten Kohlefasern (20),
und dadurch, dass der Schritt des Backens mittels Durchführen der folgenden aufeinanderfolgenden Operationen realisiert wird:
zum Zirkulieren-Bringen eines Injektionsharzes (62) in dem Formwerkzeug (50), um einen Gegendruck am Umfang der Übereinanderschichtung (14) zu erzeugen, um das in Letzterer enthaltene Harz unter Druck zu setzen; dann
Unterbrechen des Zirkulieren-Lassens des Injektionsharzes (62) nach dem Festwerden des Harzes der Übereinanderschichtung (14), was dazu führt, dass das Injektionsharz (62) zwischen die Übereinanderschichtung (14) und jede der zwei Flächen des Formwerkzeugs (52, 54) eingebracht wird, um einen Oberflächendruck auf die Übereinanderschichtung aufzubringen, bis das Festwerden des Injektionsharzes (62) erfolgt.

2. Verfahren nach Anspruch 1, **dadurch gekennzeichnet, dass** der Schritt des Backens mittels Durchführen der folgenden aufeinanderfolgenden Operationen realisiert wird:
Erhitzen des Formwerkzeugs (50), und zwar mittels einer Heizplattenpresse (60), die dazu dient, einen Druck auf die Übereinanderschichtung (14) aufzubringen, und zwar über das Formwerkzeug (50), wobei die Heizplatten auf eine Temperatur T1 gebracht werden, und Erhitzen eines Injektionsharzes (62), das im Formwerkzeug zum Zirkulieren gebracht wird, wobei das Injektionsharz (62) auf eine Temperatur T0 erhitzt wird;
nach der Stabilisierung der Temperatur der Heizplatten (60) auf der Temperatur T1 und der Alterung des Harzes der Übereinanderschichtung, Zirkulieren-Lassen, zu einem Zeitpunkt t1, des Injektionsharzes (62) in dem Formwerkzeug (50), derart, dass ein Gegendruck am Umfang der Übereinanderschichtung (14) erzeugt wird, um das in Letzterer enthaltene Harz unter Druck zu setzen, wobei das Zirkulieren-Lassen des Injektionsharzes auf einem Druck P'1 durchgeführt wird, mit einem Temperaturanstieg von der Temperatur T0 zur Temperatur T1;
zu einem Zeitpunkt t'1 werden der Druck des Injektionsharzes (62) und der Druck auf die Übereinanderschichtung (14), der mittels der Presse (60) über das Formwerkzeug (50) aufgebracht wird, beide auf einen Wert P1 gebracht;
zu einem Zeitpunkt t"1 wird die Temperatur des Injektionsharzes (62) und der Presse (60) bis auf eine Temperatur T2 erhöht, die zu einem Zeitpunkt t2 erreicht wird, der dem Festwerden des Harzes der Übereinanderschichtung entspricht;
nach dem Festwerden des Harzes der Übereinanderschichtung, Unterbrechen des Zirkulieren-Lassens des Injektionsharzes (62), das in dem Formwerkzeug (50) vorhanden bleibt, indem es zwischen die Übereinanderschichtung (14) und jede der zwei Flächen des Formwerkzeugs (52, 54) eindringt, um einen Oberflächendruck auf die Übereinanderschichtung aufzubringen, und zwar bis zu einem Festwerden des Injektionsharzes (62) zu einem Zeitpunkt t3; und
nach dem Festwerden des Injektionsharzes (62), Halten der Temperatur der Presse (60) auf der Temperatur T2 bis zu einem Zeitpunkt t4, während der Druck auf die Übereinanderschichtung (14), der mittels der Presse (60) über das Formwerkzeug (50) aufgebracht wird, auf einen Wert P0 fällt.

3. Verfahren nach Anspruch 2, **dadurch gekennzeichnet, dass** die Operation des Temperaturanstiegs des Injektionsharzes (62) und der Presse (50), die zu einem Zeitpunkt t"1 eingeleitet wird, mit einer Geschwindigkeit zwischen 1,5 und 2,5 °C/Minute realisiert wird.

4. Verfahren nach einem der vorhergehenden Ansprüche, **dadurch gekennzeichnet, dass** der Satz von Widerstandsheizelementen (26) eine Mehrzahl von elektrischen Verbindungsklemmen (44) aufweist, die sich durch eine oder mehrere Öffnungen (42) hindurch erstrecken, welche durch die Elemente der Übereinanderschichtung (14) hindurch angebracht sind, und zwar auf einer Seite der Widerstandsheizelemente (26) befindlich, wobei die Verbindungsklemmen (44) von der Übereinanderschichtung vorstehen, derart, dass sie in Aussparungen (56) eingefügt sind, die in einer (54) der zwei Formwerkzeugflächen angebracht sind.

5. Verfahren nach Anspruch 4, **dadurch gekennzeichnet, dass** jede Aussparung (56) mit einem Silikonblock (46) angefüllt ist, durch den sich eine oder mehrere der elektrischen Anschlussklemmen (44) hindurch erstrecken.

6. Verfahren nach einem der vorhergehenden Ansprüche, **dadurch gekennzeichnet, dass** die Übereinanderschichtung auch ein Metallblech (34, 34') an jedem Ende der Übereinanderschichtung aufweist.

7. Verfahren nach einem der vorhergehenden Ansprüche, **dadurch gekennzeichnet, dass** die Schichten der vorimprägnierten Kohlefasern (20) einen Kern der Übereinanderschichtung (14) bilden, wobei die Elemente von Letzterer symmetrisch bezüglich des Kerns angeordnet sind, mit Ausnahme des Satzes von Widerstandsheizelementen (26), die nur auf einer Seite des Kerns vorhanden sind.

8. Verfahren nach einem der vorhergehenden Ansprüche, **dadurch gekennzeichnet, dass** die Heizelemente (26) flach auf dem entsprechenden Haftfilm (24) angeordnet werden, bevor sie in das Formwerkzeug (50) eingelegt werden.

9. Verfahren zur Herstellung einer Vorderkante (2) eines Tragflächenelementes eines Luftfahrzeugs mit Hilfe einer Vorderkantenhaut (4), die mittels Durchführung des Verfahrens nach einem der vorhergehenden Ansprüche erhalten wird, wobei das Verfahren einen Schritt aufweist, der darin besteht, einen oder mehrere Klemmenblöcke (6) auf einer Innenfläche (4b) der Haut (4) anzubringen und daran die Anschlussklemmen (44) der Widerstandsheizelemente (26) anzuschließen.

## Claims

1. Method for producing a skin (4) of a leading edge (2) for an aircraft wing element, comprising an assembly of resistive heating elements (26) designed to form an integral part of a system for de-icing and/or anti-icing of the leading edge, said method being **characterised in that** it comprises a step for curing a stack (14) in a mould (50) between two moulding surfaces facing each other (50, 52), said stack comprising the following elements:
- said resistive heating elements assembly (26);
- two adhesive films (24, 28) arranged respectively on either side of said assembly (26), so that the heating elements adhere to each of these two adhesive films;
- two layers of electrically insulating pre-impregnated fibres (22, 30), adhering respectively to said two adhesive films (24. 28) on the sides opposite those receiving said heating elements (26); and
- a plurality of layers of pre-impregnated carbon fibres (20),
and **in that** said curing step is achieved by the implementation of the following successive operations:
- the circulation of an injection resin (62) in said mould (50) so as to generate a counter-pressure at the periphery of the stack (14) for pressurisation of the resin contained in said stack; then
- stopping the circulation of the injection resin (62) after the stack (14) resin has set, leading to the injection resin (62) being introduced between the stack (14) and each of the two mould surfaces (52, 54) in order to apply a surface pressure on said stack until the said injection resin (62) sets.

2. Method according to claim 1, **characterised in that** said curing step is achieved by the implementation of the following successive operations:
- heating the mould (50) by means of a heated plate press (60) designed to apply a pressure on the stack (14) via the mould (50), the heated plates being brought to a temperature T1, and heating of an injection resin (62) designed to be circulated in the mould, the injection resin (62) being heated to a temperature T0;
- after the stabilisation of the temperature of the heating plates (60) at temperature T1 and ageing of the stack resin, the circulation at a time t1 of the injection resin (62) in the mould (50), so as to generate a counter-pressure at the periphery of the stack (14), for pressurisation of the resin contained in the latter, said circulation of the injection resin being carried out at a pressure P'1 with an increase in temperature from the temperature T0 to temperature T1;
- at a time t'1, the pressure of the injection resin (62) and the pressure on the stack (14) applied by the press (60) via the mould (50), are both brought to a value P1;
- at a time t"1, increase in temperature of the injection resin (62) and of the press (60), up to a temperature T2 reached at a time t2 which corresponds to the setting of the stack resin;
- after the stack resin has set, stopping the circulation of the injection resin (62), which remains present in the mould (50), it being introduced between the stack (14) and each of the two mould surfaces (52, 54) in order to apply a surface pressure on said stack, until the injection resin (62) sets at a time t3; and
- after the injection resin (62) has set, the temperature of the press (60) is maintained at a temperature T2 until a time t4, whereas the pressure on the stack (14) applied by the press (60) via the mould (50) falls to a value P0.

3. Method according to claim 2, **characterised in that** the operation for raising the temperature of the injection resin (62) and of the press (50), initiated at time t"1 is achieved at a speed which is between 1.5 and 2.5 °C/minute.

4. Method according to in any of preceding claims, **characterised in that** said assembly of resistive heating elements (26) comprises a plurality of electrical connection terminals (44) which pass through one or more holes (42) made through the stack (14) elements located on one side of said resistive heating elements (26), said connection terminals (44) protruding from said stack in such a way as to be inserted into recesses (56) made on one (54) of the two moulding surfaces.

5. Method according to claim 4, **characterised in that** each recess (56) is filled with a block of silicone (46) through which one or more of said electrical connection terminals (44) pass.

6. Method as claimed in any of the preceding claims, **characterised in that** said stack also comprises a metal panel (34, 34') at each end of the stack.

7. Method as claimed in any of preceding claims, **characterised in that** said layers of pre-impregnated carbon fibres (20) form a core of said stack (14), the elements of the latter being arranged symmetrically in relation to said core, except for the assembly of resistive heating elements (26) present on only one side of said core.

8. Method as claimed in any of preceding claims, **characterised in that** said heating elements (26) are preferably placed flat on the corresponding adhesive film (24), before being placed in the mould (50).

9. Method for manufacturing a leading edge (2) of an aircraft wing element using a leading edge skin (4) obtained by the implementation of the method according to any of the preceding claims, the method comprising a step which consists of mounting one or more terminal blocks (6) onto an internal surface (4b) of said skin (4) and connecting thereon said connection terminals (44) for the resistive heating elements (26).
